# EUROPÄISCHE PATENTSCHRIFT

(11) **EP 0 462 070 B1**
(45) Veröffentlichungstag und Bekanntmachung des Hinweises auf die Patenterteilung: **01.06.1994**
(21) Anmeldenummer: 91810440.7
(22) Anmeldetag: 11.06.1991
(51) Int. Cl.: A01K 75/04

(54) **Zum Befestigen an der Netzschnur eines Fischernetzes bestimmter Auftriebskörper**
Float to be attached to a fishing net support line
Flotteur à attacher sur la corde de dos du chalut

(30) Priorität: 13.06.1990 CH 1993/90
(43) Veröffentlichungstag der Anmeldung: 18.12.1991
(73) Patentinhaber: Lengefeld, Ralf Manfred, D-73779 Deizisau (DE)
(72) Erfinder: Lengefeld, Ralf Manfred, D-73779 Deizisau (DE)
(74) Vertreter: Eder, Carl E.

(56) Entgegenhaltungen:
- DE-A- 3 343 554
- DE-A- 3 403 612
- FR-A- 1 008 076
- GB-A- 764 398
- US-A- 2 897 625
- US-A- 4 845 877

## Beschreibung

Fischernetze, die dazu bestimmt sind, in einem Gewässer senkrecht stehend angebracht zu werden, werden, wie das z.B. aus der US 2,897,625 bekannt ist, meist am obern Rand mit einer Netzschnur versehen, die zur Aufnahme der üblicherweise aus Kunststoff bestehenden tonnenförmigen Auftriebskörper dient. Diese mit einem Längskanal versehenen Auftriebskörper werden auf die Netzschnur aufgezogen, also "aufgefädelt". Dann wird die Netzschnur derart am Netz angebunden oder festgeknüpft, dass die benachbarten Auftriebskörper einen einigermassen konstanten Abstand aufweisen, der vom Gewicht des Netzes, der Grösse der Auftriebskörper und auch davon abhängig ist, ob das Netz von der Wasseroberfläche aus nach unten hängen soll oder ob das Netz weiter unten im Wasser angebracht werden soll. Wenn nun ein Auftriebskörper defekt ist und daher ausgewechselt werden muss, kann man ihn zerstören um ihn zu entfernen. Dann muss man die Netzschnur vom Netz lösen, die übrigen Auftriebskörper verschieben und am Ende einen neuen Auftriebskörper "auffädeln". Nachher kann man die Netzschnur wieder am Netz befestigen, was mindestens an einer Stelle evtl. aber auch an zwei Stellen zwischen den einzelnen Auftriebskörper zu geschehen hat. Diese Arbeit muss aber nicht nur für den Ersatz von defekten Auftriebskörper gemacht werden, sondern auch dann, wenn der Abstand zwischen den einzelnen Auftriebskörper geändert werden muss, weil beabsichtigt ist, das Netz weiter oben im Wasser oder weiter unten im Wasser zu verwenden. Dieses Lösen der Netzschnur vom Netz ist eine sehr zeitaufwendige Arbeit.

Mit der vorliegenden Erfindung wird nun die Aufgabe gelöst, diese Arbeit, also das Ersetzen eines defekten Auftriebskörpers und das neu-Einteilen der Auftriebskörper auf der Netzschnur in wesentlich kürzerer Zeit zu erledigen. Dies geschieht dadurch, dass man Auftriebskörper verwendet, die ebenfalls aus Kunststoff bestehen, tonnenförmig sind und in der Längsachse einen für die Aufnahme der Netzschnur bestimmten Kanal aufweisen, wobei das neue Merkmal darin besteht, dass die Auftriebskörper aus zwei identischen Teilen bestehen, von denen jeder eine schalenförmige Kanalhälfte aufweist, dass jeder dieser Teile an der Fläche, mit der er am andern Teil anliegt, mindestens eine Erhebung sowie eine gleiche Anzahl zur Aufnahme der Erhebungen des andern Teiles dienende Vertiefungen aufweist, und dass Mittel zum Zusammenhalten der beiden Teile vorhanden sind. Dadurch wird es möglich, die Auftriebskörper an jeder Stelle von der Netzschnur wegzunehmen und sie an jeder gewünschten Stelle auf die Netzschnur aufzusetzen, ohne dass die Netzschnur vom Netz gelöst werden muss.

Es ist nun aus der US 4,845,877 eine aus zwei identischen Teilen bestehende Klemmvorrichtung bekannt, um ein Seil, also eine mit Auftriebskörpern versehene Netzschnur, mit dem Netz selbst zu verbinden. Diese beiden Teile werden mit Schrauben zusammengehalten. Falls, wie das vorstehend beschrieben ist, aus irgendwelchen Gründen Auftriebskörper ausgewechselt werden müssen oder der Abstand zwischen Auftriebskörpern geändert werden muss, kann jede dieser Klemmvorrichtungen durch Entfernen von zwei Schrauben weggenommen werden, das Problem des schnellen Entfernens von Auftriebskörpern beim Umbau eines Treibnetzes zu einem Stellnetz ist dann aber nicht gelöst. Auch muss für den Ersatz eines bestimmten Auftriebskörpers eine ganze Reihe von Klemmvorrichtungen entfernt und nachher wieder angebracht werden, so dass diese Klemmvorrichtungen auch zur Lösung dieses Problems nichts beitragen. Dass von der Existenz dieser Klemmvorrichtung keine Anregung zur Konstruktion eines aus zwei Teilen bestehenden Auftriebskörpers ausging, hat möglicherweise seinen Grund unter anderem darin, dass zwar beim Auftriebskörper, nicht aber beim Klemmelement hohe Scherkräfte auftreten, so dass eine Ausgestaltung eines Auftriebskörpers in der Art einer Klemmvorrichtung nicht naheliegend war.

Nachfolgend werden anhand der beiliegenden Zeichnung Ausführungsbeispiele der Erfindung beschrieben.

In der Zeichnung zeigt
die Fig. 1 eine Draufsicht auf einen Teil eines erfindungsgemässen Auftriebskörpers in der Richtung des Pfeiles I
der Fig. 2, die einen Schnitt nach der Linie II-II der Fig. 1 darstellt;
die Fig. 3 zeigt eine Seitenansicht eines zweiten Ausführungsbeispiels,
die Fig. 4 einen Schnitt nach der Linie IV-IV der Fig. 3,
die Fig. 5 eine Seitenansicht eines dritten Ausführungsbeispiels und
die Fig. 6 einen Schnitt nach der Linie VI-VI der Fig. 5.

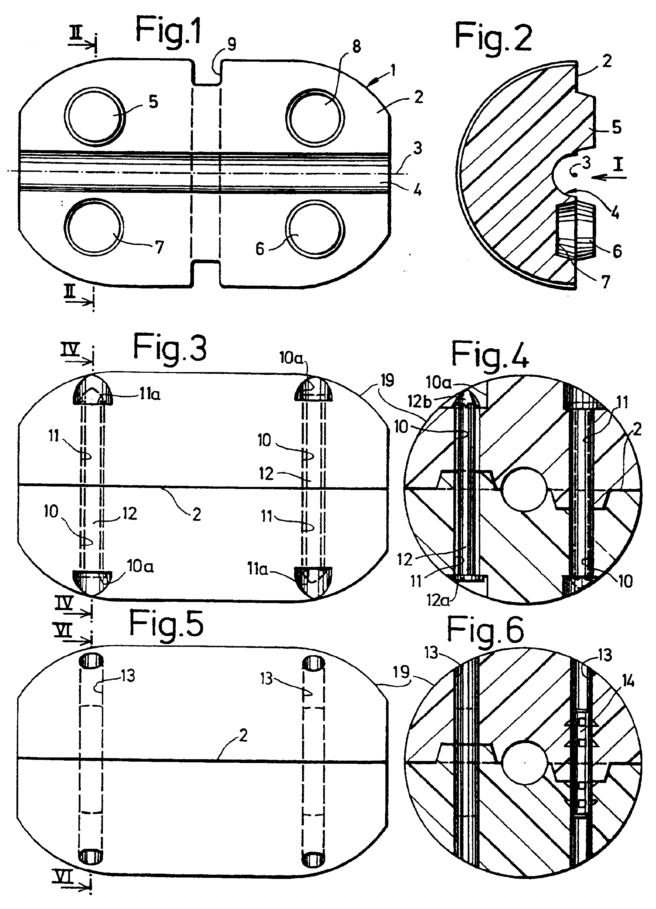

Der in den Fig. 1 und 2 dargestellte Teil 1 eines tonnenförmigen Auftriebskörpers bildet einen halben Auftriebskörper und zwar derart, dass die Schnittfläche 2 durch die Längsachse 3 des vollständigen Körpers gelegt ist, sodass jede seiner beiden Teile, also seiner Hälften, eine schalenförmige Kanalhälfte 4 aufweist. Der Querschnitt des ganzen zur Längsachse 3 konzentrischen Kanals entspricht in etwa dem Querschnitt der als Netzschnur verwendeten Leine, wobei es nicht nötig ist, dass, wie das in der Zeichnung dargestellt ist, der Kanal auf seiner ganzen Länge den gleichen Querschnitt hat; er kann ohne weiteres mit einer oder mehreren Verengungen versehen sein, die ein Verschieben auf der Netzschnur behindern. Auf der Schnittfläche 2, also der Fläche, mit welcher der eine Teil des Auftriebskörpers am andern anliegt, sind zwei Zapfen 5 und 6 angeordnet, die sich etwas verjüngen, also im wesentlichen eine kegelstumpfförmige Gestalt aufweisen. Diese beiden Zapfen sind einander diagonal gegenüber angeordnet. Des weitern ist die Fläche mit zwei einander diagonal gegenüber angeordneten Vertiefungen 7 und 8 versehen, die zur Aufnahme der Zapfen des zweiten Teils des Auftriebskörpers, also der Zapfen des zum ersten Teil identischen zweiten Teils dient. Natürlich könnte an Stelle der Zapfen auch eine anders ausgeformte Erhebung oder mehrere Erhebungen und entsprechende Vertiefungen vorhanden sein, also beispielsweise eine oder mehrere sich in der Längsrichtung des Auftriebskörpers erstreckende Rippen und dazu passende Vertiefungen. Zum Zusammenhalten der beiden Teile des Auftriebskörpers kann ein in der Zeichnung nicht dargestelltes Spannorgan verwendet werden, das in der an der Oberfläche befindlichen Rille 9 angeordnet wird, die in einer mindestens angenähert quer zur Körperlängsachse 3 liegenden Ebene ausgebildet ist. Selbstverständlich ist es auch möglich, mehr als eine Rille anzubringen und in jede Rille ein Spannorgan einzulegen.

Als Spannorgan lässt sich z.B. ein aus einem Kunststoff bestehendes Spannband verwenden, dessen Enden mit einem Schnallen-ähnlichen Verschluss zusammengehalten werden. Es ist aber auch möglich, in die Nut 9 einen Federring mit der entsprechenden Vorspannung einzulegen.

Als Material zur Herstellung der Auftriebskörper können an sich alle Kunststoffe verwendet werden, die bis jetzt zur Herstellung von einteiligen Fischernetz-Auftriebskörper verwendet werden, also meist Schaumstoffe mit einem spezifischen Gewicht von ca. 0,4 g/cm³, wobei bei der Herstellung dafür gesorgt wird, dass die Schäumung in einer geschlossenen Form stattfindet, sodass jeder Formteil eine geschlossene Aussenhaut erhält.

Bei der Verwendung der neuen, aus zwei gleichen Teilen bestehenden Auftriebskörper kann die Netzschnur ein für allemal am Netz befestigt werden, braucht also nie mehr von ihm getrennt zu werden. An den Stellen, wo man einen Auftriebskörper benötigt, werden die beiden Teile aufgesetzt und mittels eines Spannorgans dauernd zusammengehalten. Wenn ein Auftriebskörper beschädigt ist oder aus andern Gründen entfernt werden muss, so wird das Spannorgan gelöst und die Körper-Hälften lassen sich ohne Schwierigkeit von der Schnur wegnehmen und an jeder beliebigen Stelle wieder aufsetzen.

Die Fig. 3 und 4 zeigten ein weiteres Ausführungsbeispiel eines erfindungsgemässen Auftriebskörpers. Dieses unterscheidet sich vom vorstehend beschriebenen Ausführungsbeispiel dadurch, dass es keine Rille für ein Spannorgan besitzt. Hier ist nämlich jeder der beiden Zapfen 5 und 6 sowie jede der beiden Vertiefungen 7 und 8 mit einer in die Aussenfläche 19 mündenden und dort eine Abstufung 10a bzw. 11a aufweisenden Bohrung 10 bzw. 11 versehen. In mindestens zwei dieser so gebildeten Querkanäle steckt ein Stift 12, der am einen Ende mit einem Kopf 12a und am andern Ende mit Spreizdornen 12b versehen ist. Durch diese Stifte werden die beiden Hälften des Auftriebskörpers zusammengehalten. Zum Entfernen der Stifte 12 benötigt man ein hülsenartiges Instrument, mit dem sich die Spreizdornen 12b zusammendrücken lassen, damit die Stifte 12 dann aus dem Querkanal herausgezogen werden können.

Ein drittes Ausführungsbeispiel ist in den Fig. 5 und 6 dargestellt: Auch hier sind Bohrungen 13 vorhanden, die sich durch die Zapfen 5 und 6 sowie die Vertiefungen 7 und 8 in die Aussenfläche 19 erstrecken und wenigstens einigermassen senkrecht zur Schnittfläche 2 verlaufen. In diesen Bohrungen 13 stecken nun verhältnismässig kurze, mit Widerhaken versehene Stifte 14, die, wie die Stifte 12, aus Kunststoff oder Metall bestehen können. Derartige Auftriebskörper wird man dann verwenden, wenn nicht beabsichtigt ist, sie irgendwann zum Zwecke des Versetzens zu entfernen. Wenn ein Auftriebskörper bzw. eine seiner Hälften beschädigt ist und daher ersetzt werden muss, kann sie durch Wegreissen zerstört und dann durch eine neue Hälfte ersetzt werden. Auch das lässt sich natürlich wesentlich rascher durchführen, also das mühsame Lösen der Netzschnur und das Wiederanknüpfen derselben, nachdem der defekte Auftriebskörper durch einen vollständig neuen Körper ersetzt worden ist.

## Patentansprüche

1. Zum Befestigen an der Netzschnur eines Fischernetzes bestimmter, aus Kunststoff bestehender, tonnenförmiger, mit einem in der Längsachse angeordneten, für die Netzschnur bestimmten Kanal versehener Auftriebskörper, dadurch gekennzeichnet, dass der Auftriebskörper aus zwei identischen Teilen (1) besteht, von denen jeder eine schalenförmige Kanalhälfte (4) aufweist, wobei jeder dieser Teile (1) an der Fläche (2), mit der er am andern Teil (1) anliegt, mindestens eine Erhebung (5,6) sowie eine gleiche Anzahl zur Aufnahme der Erhebungen des andern Teiles (1) dienende Vertiefungen (7,8) aufweist, sowie Mittel zum Zusammenhalten der beiden Teile (1).

2. Auftriebskörper nach Anspruch 1, dadurch gekennzeichnet, dass jeder seiner Teile an der Fläche (2), mit der er am andern Teil anliegt, zwei einander diagonal gegenüber angeordnete Zapfen (5,6) und zwei einander diagonal gegenüber angeordnete Vertiefungen (7,8) für die Zapfen des andern Teiles aufweist.

3. Auftriebskörper nach Anspruch 1, dadurch gekennzeichnet, dass jeder seiner Teile an der Fläche (2), mit der er am andern Teil anliegt, eine sich in der Körper-Längsrichtung erstreckende Rippe sowie eine für die Aufnahme der Rippe des andern Teiles dienende Vertiefung aufweist.

4. Auftriebskörper nach einem der Ansprüche 1 - 3, dadurch gekennzeichnet, dass er an seiner Aussenfläche (19) mindestens eine in einer Ebene quer zur Längsachse verlaufende Rille (9) für das zum Zusammenhalten der beiden Teile dienende Mittel aufweist.

5. Auftriebskörper nach Anspruch 4, dadurch gekennzeichnet, dass das Mittel zum Zusammenhalten der beiden Teile ein in jeder Rille angebrachtes lösbares Spannband aus Kunststoff ist.

6. Auftriebskörper nach Anspruch 4, dadurch gekennzeichnet, dass das Mittel zum Zusammenhalten der beiden Teile ein in jeder Rille (9) angeordneter Federring ist.

7. Auftriebskörper nach einem der Ansprüche 1 - 3, dadurch gekennzeichnet, dass als Mittel zum Zusammenhalten der beiden Teile Schnapp-Bolzen (12) vorhanden sind, die in Bohrungen (10,11) sitzen, die mindestens angenähert senkrecht zur Fläche (2) verlaufen, mit der die beiden Hälften aneinander anliegen.

## Claims

1. Barrel-shaped buoy consisting of plastics which is intended for attachment to the net line of a fishing net and which is provided with a passage, which is intended for the net line and which is arranged on its longitudinal axis, characterised in that the buoy consists of two indentical portions (1), each of which has a passage half (4) in the form of a shell, wherein each of those portions (1) has at the surface (2), by which it contacts the other portion (1), at least one projection (5, 6) as well as a like number of recesses (7, 8) serving for reception of the projections of the other portion (1), as well as means for holding together the two portions (1).

2. Buoy according to claim 1, characterised in that each of its portions has at the surface (2) by which it contacts the other portion, two spigots (5, 6), which are arranged diagonally opposite one another, and two recesses (7, 8) which are arranged opposite one another, for the spigots of the other portion.

3. Buoy according to claim 1, characterised in that each of its portions has, at the surface (2) by which it contacts the other portion, a rib extending in the longitudinal direction of the buoy as well as a recess serving for reception of the rib of the other portion.

4. Buoy according to one of claims 1 to 3, characterised in that it has at its outer surface (19) at least one groove (9) extending in a plane transverse to the longitudinal axis for the means serving to hold the two portions together.

5. Buoy according to claim 4, characterised in that the means for holding the two portions together is a releasable tightening strap of plastics material installed in each groove.

6. Buoy according to claim 4, characterised in that the means for holding the two portions together is a resilient ring arranged in each groove (9).

7. Buoy according to one of claims 1 to 3, characterised in that present as means for holding the two portions together are snap bolts (12), which are seated in bores (10, 11) which extend at least approximately perpendicularly to the surface (2) by which the two halves contact each other.

## Revendications

1. Flotteur en matière plastique, en forme de tonneau, destiné à être attaché sur la corde d'un chalut, comportant un canal disposé dans l'axe longitudinal et destiné à ladite corde, caractérisé en ce que le flotteur est constitué de deux parties identiques (1) dont chacune comporte une moitié de canal (4) en forme de coque, chacune de ces parties (1) présentant sur la face (2) par laquelle elle s'applique sur l'autre partie (1) au moins une projection (5, 6) ainsi qu'un nombre égal d'encoches (7, 8) destinées à recevoir les saillies de l'autre partie (1), ainsi que des moyens pour l'assemblage des deux parties (1).

2. Flotteur selon la revendication 1, caractérisé en ce que chacune de ses parties présente, sur la face (2) par laquelle elle s'applique sur l'autre partie, deux pivots (5, 6) disposés en diagonale l'un par rapport à l'autre et deux encoches (7, 8) disposées en diagonale l'une par rapport à l'autre destinées à recouvrir les pivots de l'autre partie.

3. Flotteur selon la revendication 1, caractérisé en ce que chacune de ses parties présente, sur la face (2) par laquelle elle s'applique sur l'autre partie, une nervure s'étendant dans le sens longitudinal du corps ainsi qu'une encoche servant à la réception de la nervure de l'autre partie.

4. Flotteur selon l'une des revendications 1 à 3, caractérisé en ce qu'il présente sur sa face extérieure (19) au moins une gorge (9) s'étendant dans un plan transversal par rapport à l'axe longitudinal pour le moyen servant à maintenir assemblées les deux parties.

5. Flotteur selon la revendication 4, caractérisé en ce que le moyen destiné à maintenir assemblées les deux parties est une bande de serrage en matière plastique fixée de manière amovible dans chaque gorge.

6. Flotteur selon la revendication 4, caractérisé en ce que le moyen destiné à maintenir assemblées les deux parties est une bague élastique disposée dans chaque gorge (9).

7. Flotteur selon l'une des revendications 1 à 3, caractérisé en ce que le moyen destiné à maintenir assemblées les deux parties sont des boulons encliquetables (12) logés dans des perçages (10, 11) qui s'étendent, du moins approximativement, perpendiculairement à la face (2) par laquelle les deux moitiés s'appliquent l'une sur l'autre.
